# EUROPÄISCHE PATENTSCHRIFT

(11) **EP 3 453 094 B1**
(45) Veröffentlichungstag und Bekanntmachung des Hinweises auf die Patenterteilung: **31.07.2019**
(21) Anmeldenummer: 18729425.1
(22) Anmeldetag: 06.06.2018
(51) Int. Cl.: H02J 3/12

(54) **NETZTEILNEHMERGERÄT**
NETWORK SUBSCRIBER UNIT
APPAREIL DE RÉSEAU

(30) Priorität: 06.06.2017 DE 102017112438
(43) Veröffentlichungstag der Anmeldung: 13.03.2019
(73) Patentinhaber: SMA Solar Technology AG, 34266 Niestetal (DE)
(72) Erfinder: FALK, Andreas, 34131 Kassel (DE)
(74) Vertreter: Lahnor, Peter
(86) Internationale Anmeldenummer: PCT/EP2018/064925
(87) Internationale Veröffentlichungsnummer: WO 2018/224562

(56) Entgegenhaltungen:
- WO-A1-2014/012595
- DE-A1- 19 502 786
- US-A1- 2016 204 651

## Beschreibung

Die Erfindung bezieht sich auf ein Netzteilnehmergerät für ein elektrisches Energieversorgungsnetz.

Die Stabilität elektrischer Energieversorgungsnetze erfordern bekanntlich, dass die Summe der eingespeisten Leistung der Summe der entnommenen Leistung entspricht. Die Betreiber der Energieversorgungsnetze steuern daher die eingespeiste Energie beziehungsweise entnommenen Leistung, um dieses Gleichgewicht beizubehalten. Kommt es zu einem Ungleichgewicht, so ändert sich die Netzfrequenz. Übersteigt beispielsweise die entnommene Energie die eingespeiste Energie, so sinkt die Netzfrequenz, übersteigt die eingespeiste Energie die entnommene Energie, so steigt die Netzfrequenz.

Da der Anteil an dezentral erzeugter Energie in Deutschland kontinuierlich zunimmt, sinkt die Anzahl der Einspeiser, auf die der Netzbetreiber direkt zugreifen kann, um deren eingespeiste Leistung zu steuern. Daher ist es eine normative Anforderung an viele dezentrale Energieerzeuger, dass diese eigenständig die eingespeiste Leistung in Abhängigkeit von Netzparametern, insbesondere der Netzfrequenz, steuern.

Die Schrift DE 195 02 786 A1 offenbart ein Verfahren zum Spitzenlastmanagement, bei dem ein Aufforderungssignal synchron zu einem Spannungsnulldurchgang eines Netzes erzeugt wird, bei dessen Empfang eine Steuerung eine Ermittlung einer Leistungsverteilung von Geräten auslöst. Die Steuerung ist dazu eingerichtet, eine elektrische Verbindung des Geräts herzustellen, aufrecht zu erhalten oder zu unterbinden, um eine wunschgemäße Gesamtleistungsaufnahme einer Mehrzahl von Geräten zu erreichen.

Das Dokument EP 2875560 A1 schlägt weiterhin vor, dass auch Verbraucher die Netzfrequenz an ihrem Netzanschlusspunkt bestimmen und mit einem Basiswert vergleichen. Als Ergebnis des Vergleichs steuern die Verbraucher die Entnahme von elektrischer Energie aus dem Energieversorgungsnetz und tragen so eigenständig zum Erreichen des Gleichgewichts bei.

Da die Netzfrequenz innerhalb des gesamten zusammenhängenden Energieversorgungsnetzes gleich sein muss, kann dieses Steuerungsverfahren lediglich zur Erhaltung eines Gleichgewichts innerhalb des gesamten Netzes beitragen. Regional kann es daher zu einem erheblichen Ungleichgewicht zwischen Einspeisung und Verbrauch elektrischer Leistung kommen, das durch eine Übertragung elektrischer Leistung zwischen den Regionen ausgeglichen werden muss. Da die Kapazität von Übertragungsleitungen zwischen weit entfernten Abschnitten des Energieversorgungsnetzes begrenzt ist, kann es dazu kommen, dass diese Übertragungsleitungen überlastet werden, obwohl innerhalb des gesamten Netzes ein Gleichgewicht zwischen Einspeisung und Verbrauch vorliegt. Dies ist der Fall, wenn zum Beispiel im Norden Deutschlands viel Energie in das Netz eingespeist wird, ohne dass dort ein adäquater Verbrauch realisiert ist, und im Süden Deutschlands viel Energie aus dem Netz entnommen wird, ohne dass dort eine adäquate Einspeisung realisiert ist.

Es ist daher wünschenswert, Steuerungsmechanismen für Einspeisung und Entnahme von Leistung in beziehungsweise aus einem Energieversorgungsnetz zu schaffen, die geeignet sind, das Gleichgewicht zwischen Einspeisung und Entnahme auch auf regionaler Ebene sicherzustellen, sodass ein Ausbau von Kapazitäten in Übertragungsleitungen zwischen weit entfernten Netzregionen unnötig wird.

Die Spannung ist an dieser Stelle ein unzureichender beziehungsweise weniger geeignete Indikator, weil Mittelspannungs- und Hochspannungstransformatoren oft mit Regeleinrichtungen ausgerüstet sind, die das Übersetzungsverhältnis im Betrieb verändern, um die lokale Spannung zu stabilisieren. Wegen solcher Spannungsregeleingriffe ist es nicht sicher möglich, aus der momentanen Spannung eine Energieflussrichtung abzuleiten.

Der Erfindung liegt daher die Aufgabe zugrunde, ein Netzteilnehmergerät bereitzustellen, das einen Energieaustausch mit einem Energieversorgungsnetz in einer Weise einstellen kann, dass ein regionaler Ausgleich zwischen in das Energieversorgungsnetz eingespeister und daraus entnommener Leistung angestrebt wird.

Die Aufgabe wird gelöst durch ein Netzteilnehmergerät nach dem unabhängigen Anspruch 1. Bevorzugte Ausführungsformen sind in den abhängigen Ansprüchen beschrieben.

Ein erfindungsgemäßes Netzteilnehmergerät für ein elektrisches Energieversorgungsnetz weist eine Steuereinheit zur Steuerung des Leistungsaustausch des Netzteilnehmergeräts mit dem Energieversorgungsnetz, eine Einrichtung zur Bestimmung eines Spannungsnulldurchgangs an einem Anschlusspunkt des Netzteilnehmergeräts mit dem Energieversorgungsnetz, sowie eine Empfangseinheit zum Empfang eines Signal eines Referenzzeitpunkts auf. Die Steuereinheit ist dazu eingerichtet, einen Zeitversatz eines durch die Einrichtung bestimmten Zeitpunkts des Spannungsnulldurchgangs und dem Referenzzeitpunkt zu bestimmen und den Leistungsaustausch in Abhängigkeit des Zeitversatzes zu steuern.

Bevorzugt wird der Referenzzeitpunkt anhand des Zeitpunkts eines Spannungsnulldurchgangs des Energieversorgungsnetzes in einem Anschlussbereich beziehungsweise an einem Anschlusspunkt bestimmt, an dem ein Netzregion an eine Übertragungsleitung zwischen Netzregionen, insbesondere an eine Leitung auf Höchstspannungsebene, angeschlossen ist.

Der Zeitversatz zwischen dem Zeitpunkt des Spannungsnulldurchgangs am Netzanschlusspunkt des Netzteilnehmergeräts und dem Referenzzeitpunkt kann dann als Maß dazu dienen, inwieweit ein Gleichgewicht zwischen Einspeisung und Verbrauch innerhalb der Netzregion besteht.

Wird innerhalb der Netzregion mehr Energie erzeugt als verbraucht, wird der Zeitpunkt des Spannungsnulldurchgangs am Netzanschlusspunkt des Netzteilnehmergeräts tendenziell dem Spannungsnulldurchgang am Anschlusspunkt der Netzregion voreilen. Anschaulich gesprochen versuchen die in der Netzregion angeschlossenen Geräte kollektiv mit ihrem Einspeisebeziehungsweise Verbrauchsverhalten die Netzfrequenz zu erhöhen, das Netz also zu beschleunigen. Ist der Verbrauch innerhalb der Netzregion höher als die Erzeugung, wird der Zeitpunkt des Spannungsnulldurchgangs am Netzanschlusspunkt des Netzteilnehmergeräts tendenziell dem Spannungsnulldurchgang am Anschlusspunkt der Netzregion nacheilen. Anschaulich gesprochen versuchen die Netzteilnehmer in der Netzregion, die Netzfrequenz zu reduzieren, das Netz also zu bremsen.

Hierbei ist allerdings zu beachten, dass innerhalb des Energieversorgungsnetzes Phasensprünge der Spannung entstehen können. Beispielsweise an Transformatorstationen zur Umsetzung der Netzspannung kann es zu solchen Phasensprüngen der Spannung und damit zu einem Zeitversatz des Spannungsnulldurchgangs kommen (z.B. beim Einsatz von Transformatoren mit DY5-Schaltgruppe). Daher ist es vorteilhaft, dass die Steuereinheit des erfindungsgemäßen Netzteilnehmergeräts den Leistungsaustausch mit dem Energieversorgungsnetz bezugnehmend auf einen Basiswert des Zeitversatzes ausrichtet. Dieser Basiswert berücksichtigt eine Phasenverschiebung zwischen Referenzzeitpunkt und Spannungsnulldurchgang, die nicht auf ein Ungleichgewicht zwischen regionaler Einspeisung und regionalem Verbrauch zurückzuführen ist.

Ist der am Anschlusspunkt des Netzteilnehmergeräts bestimmte Zeitversatz kleiner als der Basiswert, schließt die Steuereinheit darauf, dass in der Netzregion mehr Einspeisung als Verbrauch beziehungsweise mehr Einspeisung als gewünscht vorliegt, und reduziert die Einspeisung des Netzteilnehmergeräts beziehungsweise erhöht dessen Verbrauch. Umgekehrt reagiert die Steuereinheit durch Reduzierung des Verbrauchs beziehungsweise Erhöhung der Einspeisung wenn der Zeitversatz über dem Basiswert liegt, wenn der Zeitversatz sich also in Richtung eines dem Referenzzeitpunkt nacheilenden Spannungsnulldurchgangs verändert.

Grundsätzlich muss der Referenzzeitpunkt aber nicht anhand des Zeitpunkts eines Spannungsnulldurchgangs des Energieversorgungsnetzes in einem Anschlussbereich beziehungsweise an einem Anschlusspunkt bestimmt werden. So kann der Referenzzeitpunkt auch durch Mittelung von Spannungsnulldurchgängen an mehreren, örtlich voneinander getrennten Anschlusspunkten, beispielsweise Anschlusspunkte der Netzregion an unterschiedliche Übertragungsleitungen, ermittelt werden. Es ist auch denkbar, diesen Referenzzeitpunkt anhand anderer Netzparameter, beispielsweise anhand einer an Messstellen bestimmten Übertragungsleistung, festzulegen, um den Leistungsaustausch aller erfindungsgemäßer Netzteilnehmergeräte innerhalb der betroffenen Netzregion kollektiv in gewünschter Weise zu beeinflussen.

Die Empfangseinheit im Netzteilnehmergerät ist bevorzugt als Funkempfänger ausgeführt. Auf diese Weise wird zusätzlicher Verkabelungsaufwand vermieden und der Aufbau einer Infrastruktur zur Übermittlung eines korrekten Referenzzeitpunkts wird gering gehalten. Eine kabelgebundene Übertragung des Referenzzeitpunkts ist aber nicht ausgeschlossen.

In einer vorteilhaften Ausführung der Erfindung ist die Empfangseinheit dazu eingerichtet, eine Laufzeit des Signals zwischen einem Sender des Referenzzeitpunktsignals und der Empfangseinheit bei der Bestimmung des Referenzzeitpunkts zu berücksichtigen. Dies ist besonders dann wichtig, wenn der räumliche Abstand zwischen dem Sender des Referenzzeitpunkt und dem Netzteilnehmergerät so groß ist, dass die Laufzeit des Signals für den Referenzzeitpunkt für die korrekte Bestimmung des Zeitversatzes relevant ist. Der Abstand zwischen dem Sender des Referenzzeitpunktsignals und der Empfangseinheit kann in dem Netzteilnehmergerät hinterlegt sein oder durch das Netzteilnehmergeräts eigenständig bestimmt werden, zum Beispiel indem das Netzteilnehmergerät seine Position absolut bestimmt (zum Beispiel durch ein GPS-Signal) oder relativ zu einem oder einer Mehrzahl von Sendern mit vorbekannten Positionen (zum Beispiel durch Triangulation) bestimmt.

Anstelle des Nulldurchgangs der Spannung kann auch der Scheitelpunkt oder jede beliebige andere Phasenlage als Basis für die Bestimmung des Zeitversatzes herangezogen werden. Daher soll der Begriff des Spannungsnulldurchgangs im Rahmen dieser Anmeldung nicht nur den konkreten Zeitpunkt umfassen, zu dem die Wechselspannung die Polarität wechselt, sondern jeder hiermit in fester Beziehung stehende Zeitpunkt des Phasenverlaufs der Wechselspannung, der als Bezugspunkt zur Bestimmung des Zeitversatzes herangezogen wird. Der entsprechende Zeitpunkt kann beispielsweise mittels eines PLL-Algorithmus (Phase-Locked Loop) bestimmt werden.

In einer Ausführung der Erfindung ist das Netzteilnehmergerät als Einspeiser, beispielsweise als Windkraftwerk, Photovoltaikanlage oder Blockheizkraftwerk, ausgeführt. In diesem Fall steuert die Steuereinheit die Einspeisung elektrischer Energie in das Energieversorgungsnetz.

In einer weiteren Ausführung der Erfindung ist das Netzteilnehmergerät als Verbraucher ausgeführt. In diesem Fall steuert die Steuereinheit den Verbrauch des Netzteilnehmergeräts. In noch einer weiteren Ausführung der Erfindung weist das Netzteilnehmergerät einen Energiespeicher auf, wobei die Steuereinheit dazu eingerichtet ist, den Leistungsaustausch mit dem Energieversorgungsnetz mittels Laden beziehungsweise Entladen des Energiespeichers zu steuern. Vorteilhafterweise ist die Steuereinheit des Netzteilnehmergeräts in diesem Fall so eingerichtet, dass es die erzeugte Energie, die aufgrund des bestimmten Zeitversatzes nicht in das Energieversorgungsnetz eingespeist werden soll, teilweise oder vollständig in den Energiespeicher umleitet, um diesen zu laden. Gleichfalls kann die Steuereinheit so eingerichtet sein, dass es elektrische Energie, die zu einem gegebenen Zeitpunkt nicht erzeugt werden kann, aber in das Energieversorgungsnetz eingespeist werden soll, dem Energiespeicher entnimmt, so dass dieser entladen wird. Analog kann die Steuereinheit dafür sorgen, dass Verbraucher des Netzteilnehmergeräts elektrische Energie aus dem Energiespeicher erhalten, wenn diese aufgrund des bestimmten Zeitversatzes nicht aus dem Energieversorgungsnetz entnommen werden soll. Selbstverständlich kann die Steuereinheit auch dafür sorgen, dass der Energiespeicher aus dem Energieversorgungsnetz geladen wird, wenn der bestimmte Zeitversatz eine Entnahme von Leistung aus dem Energieversorgungsnetz favorisiert.

Neben der Steuerung des Leistungsaustausches mit dem Energieversorgungsnetz kann das Netzteilnehmergerät auch dazu eingerichtet sein, die ausgetauschte Leistung über einen vorgegebenen Zeitraum gewichtet mit einem Preisfaktor zu akkumulieren, wobei der Preisfaktor als Funktion des Zeitversatzes bestimmt wird. Auf diese Weise kann durch das Netzteilnehmergeräts gleichzeitig auch die Funktion eines Energiemeters realisiert werden, und es kann zu Abrechnungszwecken mit dem Energieversorger der eingespeisten beziehungsweise entnommenen Energie ein variabler Preis zugeordnet werden, der von der jeweiligen Versorgungssituation innerhalb der Netzregion abhängt. Ein Verhalten des Netzteilnehmergeräts, das zur Stabilität der Netzregion, also zum Gleichgewicht zwischen regionalem Verbrauch und regionaler Einspeisung beiträgt, kann auf diese Weise durch finanzielle Anreize belohnt, ein Verhalten, das die Netzregion destabilisiert, entsprechend finanziell sanktioniert werden.

Vorteilhafterweise kann die Steuereinheit dazu eingerichtet sein, den Basiswert des Zeitversatzes durch Mittelung des bestimmten Zeitversatzes über einen vorgegebenen Zeitraum zu ermitteln und den Leistungsaustausch in Abhängigkeit einer Differenz zwischen momentan bestimmtem Zeitversatz und dem Basiswert zu steuern. Die Bestimmung des Basiswerts kann in regelmäßigen oder unregelmäßigen Zeitabständen wiederholt werden, um beispielsweise geänderte Rahmenbedingungen, beispielsweise einer Änderung der Infrastruktur der Netzregion durch Zubau oder Abbau von anderen Netzteilnehmern, Transformatorstationen oder Netzabschnitten, Rechnung zu tragen. Die Ermittlung des Basiswertes erfolgt in diesem Fall also adaptiv.

In Netzausläufern kann die die Bandbreite der Phasendifferenz zwischen maximalem Bezug und maximaler lokaler Erzeugung größer sein als bei zentraleren Netzknotenpunkten. Daher sollte die monetäre Bewertung in Form des Preisfaktors relativ zu der Gesamtbandbreite der vorkommenden Phasendifferenzen erfolgen. Aus diesem Grund sollte in Netzausläufern eine größere Phasendifferenz zur gleichen monetären Bewertung, also zur gleichen Schwankungsbreite des Preisfaktors, führen, wie an zentralen Netzknotenpunkten. Bewertungsparameter sind also die Basisphase und die Phasenbandbreite, die an einem Netzknoten billigerweise vorkommt.

In einer vorteilhaften Ausgestaltung der Erfindung ist die Steuereinheit dazu eingerichtet, eine Bandbreite des Zeitversatzes zu bestimmen und den Preisfaktors in Abhängigkeit der Bandbreite zu skalieren. Hierzu kann die Steuereinheit die Werte des Zeitversatzes über einen vorgegebenen Zeitraum beobachten, insbesondere ohne dabei den Leistungsaustausch aktiv als Funktion des Zeitversatzes zu steuern. Anschließend kann dem Mittelwert des Zeitversatzes ein erster Preisfaktor und einem Extremwert oder einem statistisch mit der Bandbreite verküpften, vom Mittelwert abweichenden Werten (zum Beispiel um eine Standard-Abweichung σ) ein zweiter Preisfaktor zugeordnet werden. Diese beiden Preisfaktoren können dann die Bezugspunkte für die Zuordnung von Preisfaktoren für andere Werte des Zeitversatzes bilden, beispielsweise durch lineare Interpolation. Insbesondere können die Bezugspunkte für den Preisfaktor so gewählt werden, dass bei nacheilendem Spannungsnulldurchgang am Netzanschlusspunkt des Netzteilnehmergerätes, also bei einem gegenüber dem Mittelwert erhöhtem Zeitversatzwert, ein höherer Preisfaktor verwendet wird, und bei voreilendem Spannungsnulldurchgang, also bei einem gegenüber dem Mittelwert geringerem Zeitversatzwert, ein niedriger Preisfaktor dem bestimmten Leistungsaustausch zugrunde gelegt wird. So wird eine erhöhte Einspeisung bei nacheilendem Netzzustand ökonomisch bevorteilt, während ein erhöhter Verbrauch in diesem Fall entsprechend benachteiligt wird. Bei voreilendem Netzzustand wird Einspeisung und Verbrauch ökonomisch gerade gegenteilig bewertet. Durch Steuerung des Leistungsaustauschs kann das Netzteilnehmergerät so über ein ökonomisch vorteilhaften Betrieb zur Netzstabilisierung beitragen.

Ergänzend zur Steuerung des Leistungsaustausches mit dem Energieversorgungsnetz in Abhängigkeit des Zeitversatzes kann das Netzteilnehmergerät den Leistungsaustausch in vorbekannter Weise in Abhängigkeit anderer Netzparameter, insbesondere der Netzfrequenz und/oder der Spannungsamplitude, steuern.

Einem weiteren Aspekt der Erfindung liegt die Aufgabe zugrunde, Leistungsflüsse innerhalb des Netzes mithilfe eines Netzteilnehmergeräts beziehungsweise einer Mehrzahl von Netzteilnehmergeräten zu bestimmen und zu überwachen. Ein Netzteilnehmergerät für ein elektrisches Energieversorgungsnetz entsprechend dieses Aspektes der Erfindung weist eine Einrichtung zur Bestimmung eines Spannungsnulldurchgangs an einem Anschlusspunkt des Netzteilnehmergeräts mit einem Energieversorgungsnetz, sowie eine Empfangseinheit zum Empfang eines Signals eines Referenzzeitpunkts auf. Das Netzteilnehmergerät ist dazu eingerichtet, den Zeitpunkt des Spannungsnulldurchgangs relativ zum Referenzzeitpunkt zu bestimmen und diesen Zeitpunkt zu speichern und zu einer sofortigen oder späteren Übermittlung bereitstellen. Bevorzugt erfasst das Netzteilnehmergerät eine Vielzahl von Spannungsnulldurchgängen und bestimmt, speichert und übermittelt hieraus eine Netzfrequenz, sowie einen Zeitverlauf einer Phase des Spannungsnulldurchgangs.

Eine Auswerteeinheit, die Teil des Netzteilnehmergeräts oder eine eigenständige Einheit sein kann, die entfernt vom Netzteilnehmergerät angeordnet ist, empfängt die Daten über die Zeitpunkte des Spannungsnulldurchgangs beziehungsweise über Netzfrequenz und/oder den Zeitverlauf der Phase von einer Mehrzahl von Netzteilnehmergeräten. Die Auswerteeinheit bestimmt aus diesen Daten Informationen über einen Phasenversatz zwischen den Spannungsnulldurchgängen von jeweils zwei dieser Netzteilnehmergeräte in Abhängigkeit der Referenzzeit und erstellt hieraus Informationen über einen Zeitverlauf der Phasenversätze. Die Auswerteeinheit ist weiterhin dazu eingerichtet, aus dem Zeitverlauf der Phasenversätze einen Zeitverlauf von Leistungsflussänderungen von zwischen den entsprechenden Netzteilnehmergeräten verlaufenden Netzabschnitten zu bestimmen. Durch Kalibrierung der Informationen über den Phasenversatz zwischen jeweils zwei der Netzteilnehmergeräte, beispielsweise durch Bestimmung eines Bezugs-Phasenversatzes bei bekanntem Leistungsfluss im betroffenen Netzabschnitt, kann auf einen aktuellen Leistungsfluss in diesem Netzabschnitt geschlossen werden. Diese Kalibrierung wird bevorzugt durch die Auswerteeinheit durchgeführt, so dass diese nach der Kalibrierung in der Lage ist, Informationen über Leistungsflüsse in den betroffenen Netzabschnitten zwischen den jeweiligen Netzteilnehmergeräten zu ermitteln.

Die Qualität der Kalibrierung kann dadurch verbessert werden, dass Phasenversätze bei mehreren bekannten Leistungsfluss werden bestimmt werden, insbesondere wenn diese Leistungsflüsse Extremwerte zulässiger Leistungsflüsse darstellen. Alternativ können Kenntnis oder berechtigte Annahmen über eine Impedanz des betroffenen Netzabschnitts genutzt werden, um die Kalibrierung durchzuführen oder zu verbessern.

Die Präzision, mit der der Zeitpunkt eines Spannungsnulldurchgangs bestimmt wird, kann auch dadurch gesteigert werden, indem die Zeitpunkte einer Vielzahl von Spannungsnulldurchgängen bestimmt und unter der Annahme einer konstanten Netzfrequenz während der Bestimmung der Zeitpunkte der Vielzahl von Spannungsnulldurchgängen gemittelt werden.

In einer ersten Ausführungsform dieses Aspektes der Erfindung sind ein erstes Netzteilnehmergerät auf einer ersten Seite eines Transformators und ein zweites Netzteilnehmergerät auf einer zweiten Seite des Transformators angeordnet. In dieser Konfiguration kann der Leistungsfluss über den Transformator durch die Auswerteeinheit überwacht werden.

Vorteilhafterweise ist die Auswerteeinheit dazu eingerichtet, ein Warnsignal zu erzeugen und bevorzugt an einen Kommunikationspartner zu übertragen, wenn der aus dem Phasenversatz bestimmte Leistungsfluss in einem Netzabschnitt außerhalb eines für diesen Netzabschnitt zulässigen Wertebereichs liegt. Hierdurch kann beispielsweise eine Überlastung eines Netzabschnitts oder von in dem Netzabschnitt angeordneten Netzkomponenten angezeigt und idealerweise durch geeignete Gegenreaktion vermieden werden.

In einer weiteren vorteilhaften Ausführungsform übermittelt die Auswerteeinheit die bestimmten Leistungsflussinformationen an eine übergeordnete Einheit oder auch an die Netzteilnehmergeräte selbst. Im letzten Fall können die Netzteilnehmergeräte ihr Einspeiseverhalten in Abhängigkeit von der übermittelten Leistungsflussinformation verändern, insbesondere einem unerwünschten Leistungsfluss entgegenwirken. Auch die übergeordnete Einheit kann geeignete Maßnahmen ergreifen, um unerwünschten Leistungsflüssen entgegenzuwirken.

Ein dem weiteren Aspekt zugeordnetes Verfahren umfasst die folgenden Schritte. In einem ersten Netzteilnehmergerät wird ein erster Zeitpunkt eines Spannungsnulldurchgangs eines dem ersten Netzteilnehmergerät angeschlossenen Energieversorgungsnetzes relativ zu einem im ersten Netzteilnehmergerät empfangenden Referenzzeitsignal bestimmt. In einem zweiten Netzteilnehmergerät wird ein zweiter Zeitpunkt eines Spannungsnulldurchgangs eines an dem zweiten Netzteilnehmergerät angeschlossenen Energieversorgungsnetzes relativ zu dem im zweiten Netzteilnehmergerät empfangenden Referenzzeitsignal bestimmt. Aus der Differenz der Zeitpunkte wird ein Leistungsfluss in einem das erste und das zweite Netzteilnehmergerät verbindenden Netzabschnitt ermittelt. Hierzu kann eine Kalibrierung durch Bestimmung einer Zeitpunktdifferenz bei bekanntem Leistungsfluss und/oder Kenntnisse oder Annahmen über eine Leitungsimpedanz des verbindenden Netzabschnitts genutzt werden. Wenn der ermittelte Leistungsfluss außerhalb eines zulässigen Wertebereichs liegt, kann ein Warnsignal erzeugt und übertragen werden.

Im Folgenden wird die Erfindung mithilfe von Figuren illustriert, von denen
- Fig. 1: eine erfindungsgemäßes Netzteilnehmergerät,
- Fig. 2: eine schematische Darstellung einer Netzregion eines Energieversorgungsnetzes und
- Fig. 3: einen Spannungsverlauf an unterschiedlichen Punkten des Energieversorgungsnetzes darstellen.

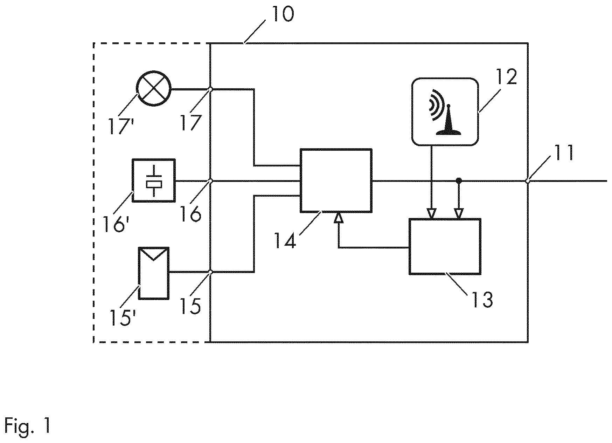

Fig. 1 zeigt einen inneren Aufbau eines erfindungsgemäßen Netzteilnehmergeräts 10. Das Netzteilnehmergerät 10 weist einen Anschlusspunkt 11 zur Verbindung mit einem Energieversorgungsnetz auf. Diese Verbindung kann an einer Phase oder an drei Phasen erfolgen. Eine Einrichtung 13 ist mit dem Anschlusspunkt 11 verbunden, um den Zeitpunkt eines Spannungsnulldurchgangs des mit dem Anschluss 11 verbundenen Energieversorgungsnetzes zu bestimmen. Weiterhin weist das Netzteilnehmergerät 10 eine Empfangseinheit 12 auf, die in der Lage ist, ein externes Zeitsignal insbesondere als Funksignal zu empfangen. Das Zeitsignal wird an die Einrichtung 13 weitergegeben, in der es mit den Zeitpunkt des Spannungsnulldurchgangs verglichen wird, um den Zeitversatz zwischen diesen beiden Zeitpunkten zu bestimmen. Das Ergebnis des Vergleichs wird an eine Steuereinheit 14 des Netzteilnehmergeräts 10 weitergegeben, die ihrerseits über Anschlüsse 15, 16, 17 mit Verbrauchern 17', Erzeugern 15' und/oder Energiespeichern 16' verbunden ist. Die Steuereinheit 14 steuert in Abhängigkeit des Zeitversatzes den Leistungsaustausch über den Anschlusspunkt 11 zwischen dem Energieversorgungsnetz und den Verbrauchern 17', Erzeugern 15' und/oder Energiespeichern 16'. Die Steuereinheit 14 kann hierzu die Leistungsflüsse über die Anschlüsse 15, 16, 17 einzeln oder gemeinsam verändern, um den Leistungsaustausch mit dem Energieversorgungsnetz zu steuern. Die Verbraucher 17', Erzeuger 15' und/oder Energiespeicher 16' können hierbei Teil des Netzteilnehmergeräts 10 sein, wodurch dieses als Einspeiser, Verbraucher oder Speicher wirkt, oder das Netzteilnehmergerät 10 kann ein eigenständiges Gerät sein, an dem diese Komponenten angeschlossen sind, beziehungsweise das diese Komponenten steuert.

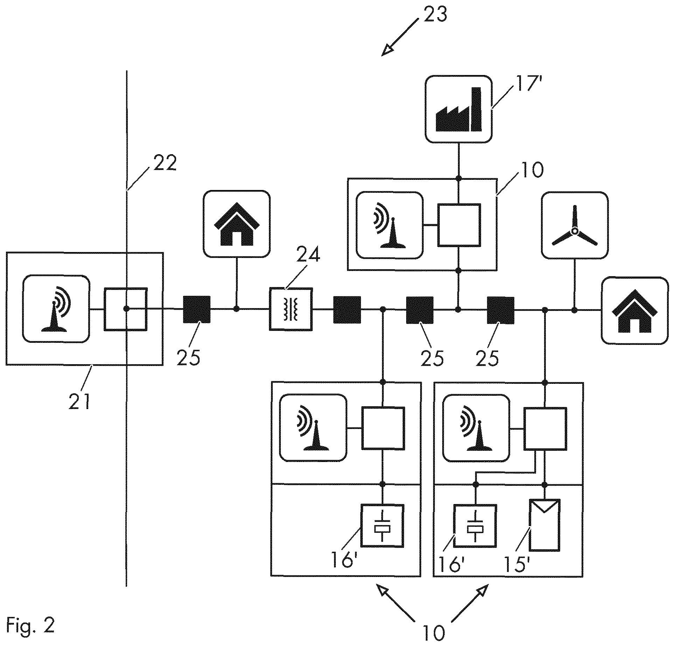

Erfindungsgemäße Netzteilnehmergeräte 10 können innerhalb einer Netzregion 23 an unterschiedlichen Stellen eingesetzt werden, wie in Fig. 2 schematisch dargestellt ist. Die erfindungsgemäßen Netzteilnehmergeräte 10 können in beliebiger Kombination mit weiteren erfindungsgemäßen, aber auch mit nicht erfindungsgemäßen Netzteilnehmergeräten verwendet werden. Diese können Verbraucher, Erzeuger und/oder Speicher elektrischer Leistung aufweisen. So ist in dem in Fig. 2 gezeigten Ausführungsbeispiel das an den Verbraucher 17' angeschlossene Netzteilnehmergerät 10 als eigenständiges Gerät ausgeführt, während andere erfindungsgemäße Netzteilnehmergeräte 10 Speicher 16' und/oder Erzeuger 15' aufweisen.

Die Netzregion 23 ist an eine Übertragungsleitung 22 an einem Anschlusspunkt angebunden, an dem gleichzeitig ein Sender 21 angeordnet ist. Der Sender 21 sendet hierbei ein Funksignal, das einen Referenzzeitpunkt als Signalinformation enthält. Der Referenzzeitpunkt wird bevorzugt anhand eines Nulldurchgangs der Spannung der Übertragungsleitung 22 bestimmt.

Die unterschiedlichen erfindungsgemäßen Netzteilnehmergeräte 10 empfangen dieses Funksignal und werten es hinsichtlich des Referenzzeitpunkts aus. Hierbei wird die Laufzeit des Funksignals aufgrund des räumlichen Abstands zwischen Sender und Empfänger jeweils berücksichtigt.

Innerhalb der Netzregion 23 wird die Impedanz des Energieversorgungsnetzes in Form von diskreten Netzimpedanzen 25 dargestellt. Diese verursachen eine Phasenverschiebung im Energieversorgungsnetz, die von der am Ort der Netzimpedanz 25 fließenden Leistung abhängt. Weitere Phasenverschiebungen, die auch leistungsunabhängige Komponenten aufweisen können, können durch Transformatoren 24 verursacht werden, die Spannungsniveaus innerhalb des Energieversorgungsnetzes anpassen. Die Phasenverschiebungen der Netzimpedanzen 25 und Transformatoren 24 addieren sich entlang der Leitungen innerhalb der Netzregion, so dass die Phasenverschiebung zwischen unterschiedlichen Punkten des Energieversorgungsnetz ein Maß für Richtung und Höhe eines Netzleistungsflusses zwischen diesen Punkten und damit eines lokalen Ungleichgewichts zwischen Einspeisung und Verbrauch im Bereich von zumindest einem dieser Punkte ist.

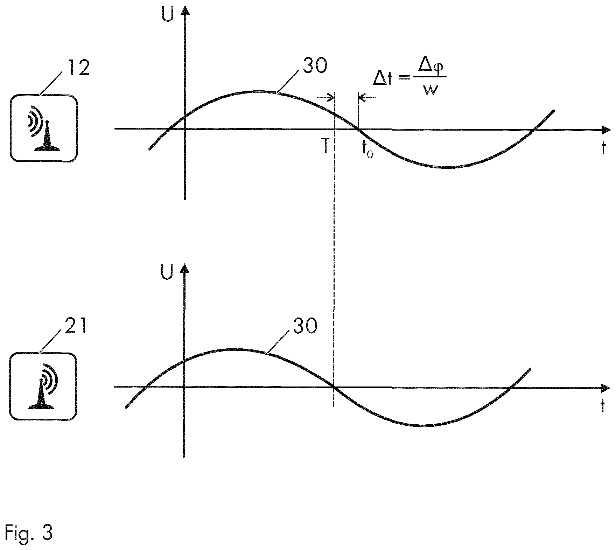

In Fig. 3 sind zeitliche Spannungsverläufe 30 am Ort des Senders 21 im unteren Diagramm und am Ort der Empfangseinheit 12 eines Netzteilnehmergeräts 10 im oberen Diagramm dargestellt. Gegenüber dem Spannungsnulldurchgang am Ort des Senders 21 zur Zeit T findet der Spannungsnulldurchgang am Ort der Empfangseinheit 12 beziehungsweise des Netzteilnehmergeräts 10 zur Zeit t₀ um einen Zeitversatz Δt=t₀-T=Δφ/ω später statt. Hierbei entspricht ω der Netzfrequenz und Δφ dem Phasenversatz. Der Phasenversatz beziehungsweise der Zeitversatz kann sich in einen Anteil aufteilen, der vom Gleichgewichtszustand zwischen Einspeisung und Verbrauch in der Netzregion abhängig ist und einen davon unabhängigen Anteil. Der unabhängige Anteil kann in der oben beschriebenen Weise bestimmt und als Basiswert berücksichtigt werden. Der Leistungsaustausch des erfindungsgemäßen Netzteilnehmergeräts 10 mit dem Netz wird bevorzugt ausschließlich durch den abhängigen Anteil bestimmt, so dass einem Ungleichgewicht zwischen Einspeisung und Verbrauch in der Netzregion entgegengewirkt wird. Der Phasenversatz kann als Funktion der Zeit innerhalb einer Schwankungsbreite variieren, je nachdem, wie die Lastverteilung innerhalb der Netzregion 23 variiert.

Die Fig. 3 kann auch genutzt werden, um die Bestimmung eines Leistungsflusses gemäß des weiteren Aspektes der Erfindung zu erläutern. Hierbei sind die dargestellten Spannungsverläufe 30 als Spannungsverläufe am Ort von zwei Netzteilnehmergeräten 10 zu verstehen, die beide eine Empfangseinheit 12 wie in Fig. 1 aufweisen. Das Referenzzeitsignal muss in diesem Fall keinen Bezug zum Spannungsnulldurchgang an einem anderen Ort des Energieversorgungsnetzes aufweisen, sondern kann beispielsweise das Zeitsignal einer Atomuhr sein, dass per GPS-Funksignal übertragen wird. Das Netzteilnehmergerät, das dem oberen Diagramm zugeordnet ist, bestimmt den Spannungsnulldurchgang zu einer Zeit t₀, während das Netzteilnehmergerät, das dem unteren Diagramm zugeordnet ist, den Spannungsnulldurchgang zu einer Zeit T bestimmt. Der Zeitversatz Δt=t₀-T=Δφ/ω hängt hierbei von dem Leistungsfluss in dem Netzabschnitt und dessen Leitungsimpedanz, insbesondere dessen Induktivität, ab, das die beiden Netzteilnehmergeräte verbindet. Wenn beispielsweise für zwei Leistungsflusswerte die zugehörigen Zeitversätze Δt bekannt sind, kann durch Interpolation oder Extrapolation auch jedem anderem Zeitversatz ein zugehöriger Leistungsfluss zugeordnet werden. Hierbei zu beachten ist, dass nicht notwendigerweise einem Leistungsfluss von Null auch ein Zeitversatz von Null zugeordnet sein muss, insbesondere, wenn zwischen den Netzteilnehmern ein Transformator angeordnet ist, der einen Sprung der Netzphase verursachen kann. In diesem Fall kann einem Leistungsfluss von Null auch ein von Null abweichender Zeitversatz oder Phasenversatz zugeordnet sein.

### BEZUGSZEICHENLISTE

- 10: Netzteilnehmergerät
- 11: Anschlusspunkt
- 12: Empfangseinheit
- 13: Einrichtung
- 14: Steuereinheit
- 15: Anschluss
- 15': Erzeuger
- 16: Anschluss
- 16': Energiespeicher
- 17: Anschluss
- 17': Verbraucher
- 21: Sender
- 22: Übertragungsleitung
- 23: Netzregion
- 24: Transformator
- 25: Netzimpedanz
- 30: Spannungsverlauf

## Patentansprüche

1. Netzteilnehmergerät (10) für ein elektrisches Energieversorgungsnetz, aufweisend:
- eine Steuereinheit (14) zur Steuerung des Leistungsaustausches des Netzteilnehmergeräts (10) mit dem Energieversorgungsnetz,
- eine Einrichtung (13) zur Bestimmung eines Spannungsnulldurchgangs an einem Anschlusspunkt (11) des Netzteilnehmergeräts (10) mit dem Energieversorgungsnetz,
- eine Empfangseinheit (12) zum Empfang eines Signal eines Referenzzeitpunkts, wobei die Steuereinheit (14) dazu eingerichtet ist, einen Zeitversatz zwischen einem durch die Einrichtung (13) bestimmten Zeitpunkt des Spannungsnulldurchgangs und dem Referenzzeitpunkt zu bestimmen, **dadurch gekennzeichnet, dass** die Steuereinheit (14) dazu eingerichtet ist, den Leistungsaustausch in Abhängigkeit des Zeitversatzes zu steuern, so dass ein regionaler Ausgleich zwischen in das Energieversorgungsnetz eingespeister und daraus entnommener Leistung angestrebt wird.

2. Netzteilnehmergerät (10) nach Anspruch 1, wobei die Empfangseinheit (12) als Funkempfänger ausgeführt ist.

3. Netzteilnehmergerät (10) nach Anspruch 2, wobei die Empfangseinheit (12) dazu eingerichtet ist, eine Laufzeit des Signals zwischen einem Sender (21) des Referenzzeitpunktsignals und der Empfangseinheit (12) bei der Bestimmung des Referenzzeitpunkts zu berücksichtigen.

4. Netzteilnehmergerät (10) nach einem der vorangehenden Ansprüche, ausgeführt als Einspeiser.

5. Netzteilnehmergerät (10) nach einem der vorangehenden Ansprüche, ausgeführt als Verbraucher.

6. Netzteilnehmergerät (10) nach einem der vorangehenden Ansprüche, wobei das Netzteilnehmergerät (10) dazu eingerichtet ist, die ausgetauschte Leistung über einen vorgegebenen Zeitraum gewichtet mit einem Preisfaktor zu akkumulieren, wobei der Preisfaktor als Funktion des Zeitversatzes bestimmt wird.

7. Netzteilnehmergerät (10) nach Anspruch 6, wobei die Steuereinheit (14) dazu eingerichtet ist, eine Bandbreite des Zeitversatzes zu bestimmen und den Preisfaktors in Abhängigkeit der Bandbreite zu skalieren.

8. Netzteilnehmergerät (10) nach einem der vorangehenden Ansprüche, wobei die Steuereinheit (14) dazu eingerichtet ist, eine Einspeisung in das Energieversorgungsnetz zu erhöhen oder eine Entnahme aus dem Energieversorgungsnetz zu verringern, wenn der Zeitversatz sich in Richtung eines dem Referenzzeitpunkt nacheilenden Spannungsnulldurchgangs verändert.

9. Netzteilnehmergerät (10) nach einem der vorangehenden Ansprüche, wobei die Steuereinheit (14) dazu eingerichtet ist, einen Basiswert für den Zeitversatz durch Mittelung des bestimmten Zeitversatzes über einen vorgegebenen Zeitraum zu ermitteln und den Leistungsaustausch in Abhängigkeit einer Differenz zwischen momentan bestimmtem Zeitversatz und Basiswert zu steuern.

10. Netzteilnehmergerät (10) nach einem der vorangehenden Ansprüche, weiterhin aufweisend einen Energiespeicher (16'), wobei die Steuereinheit dazu eingerichtet ist, den Leistungsaustausch mit dem Energieversorgungsnetz mittels Laden beziehungsweise Entladen des Energiespeichers (16') zu steuern.

## Claims

1. Network subscriber device (10) for an electrical power supply network, comprising:
- a control unit (14) for controlling the power exchange of the network subscriber device (10) with the power supply network,
- a device (13) for determining a voltage zero crossing at a connection point (11) of the Network subscriber device (10) to the power supply network,
- a receiving unit (12) for receiving a signal of a reference time,
the control unit (14) being adapted to determine a time offset between a time of voltage zero crossing determined by the device (13) and the reference time,
**characterised in that**
the control unit (14) is adapted to control the power exchange as a function of the time offset, so that a regional balance is sought between power fed into the power supply network and power taken from it.

2. Network subscriber device (10) according to claim 1, the receiving unit (12) being designed as a radio receiver.

3. Network subscriber device (10) according to claim 2, wherein the receiving unit (12) is adapted to take into account a propagation time of the signal between a transmitter (21) of the reference time signal and the receiving unit (12) when determining the reference time signal.

4. Network subscriber device (10) according to one of the preceding claims, designed as a power feeder.

5. Network subscriber device (10) according to one of the preceding claims, designed as a consumer.

6. Network subscriber device (10) according to one of the preceding claims, wherein the Network subscriber device (10) is adapted to accumulate the exchanged power weighted with a price factor over a predetermined period of time, wherein the price factor is determined as a function of the time offset.

7. Network subscriber device (10) according to claim 6, wherein the control unit (14) is adapted to determine a bandwidth of the time offset and to scale the price factor as a function of the bandwidth.

8. Network subscriber device (10) according to one of the preceding claims, wherein the control unit (14) is adapted to increase a feed into the power supply network or to decrease a withdrawal from the power supply network when the time offset changes in the direction of a voltage zero crossing lagging the reference time.

9. Network subscriber device (10) according to one of the preceding claims, wherein the control unit (14) is adapted to determine a base value for the time offset by averaging the determined time offset over a predetermined period of time and to control the power exchange as a function of a difference between the currently determined time offset and the base value.

10. Network subscriber device (10) according to one of the preceding claims, further comprising an energy store (16'), the control unit being adapted to control the exchange of power with the energy supply network by charging or discharging the energy store (16'), respectively.

## Revendications

1. Dispositif d'abonné de réseau (10) pour un réseau d'alimentation électrique, comportant :
- une unité de commande (14) pour commander l'échange de puissance du dispositif d'abonné de réseau (10) avec le réseau d'alimentation électrique,
- un dispositif (13) pour déterminer un passage par zéro de tension à un point de connexion (11) du dispositif d'abonné de réseau (10) avec le réseau d'alimentation électrique,
- une unité de réception (12) pour recevoir un signal d'un temps de référence,
l'unité de commande (14) étant adaptée pour déterminer un décalage temporel entre un temps de passage par zéro de tension déterminé par le dispositif (13) et le temps de référence,
**caractérisé en ce que**
l'unité de commande (14) est adaptée pour commander l'échange de puissance en fonction du décalage temporel, de sorte qu'un équilibre régional soit recherché entre la puissance alimentée en le réseau d'alimentation électrique et la puissance prélevée sur celui-ci.

2. Dispositif d'abonné de réseau (10) selon la revendication 1, l'unité de réception (12) étant conçue comme un récepteur radio.

3. Dispositif d'abonné de réseau (10) selon la revendication 2, dans lequel l'unité de réception (12) est adaptée pour prendre en compte un temps de propagation du signal entre un émetteur (21) du signal de temps de référence et l'unité de réception (12) pour déterminer le temps de référence.

4. Dispositif d'abonné de réseau (10) selon l'une des revendications précédentes, conçu comme un dispositif d'alimentation.

5. Dispositif d'abonné de réseau (10) selon l'une des revendications précédentes, conçu comme un dispositif de consommation.

6. Dispositif d'abonné de réseau (10) selon l'une des revendications précédentes, dans lequel le dispositif d'abonné de réseau (10) est adapté pour accumuler la puissance échangée pondérée avec un facteur de prix sur une période de temps prédéterminée, dans lequel le facteur de prix est déterminé en fonction du décalage temporel.

7. Dispositif d'abonné de réseau (10) selon la revendication 6, dans lequel l'unité de commande (14) est adaptée pour déterminer une largeur de bande du décalage temporel et pour adapter le facteur de prix en fonction de la largeur de bande.

8. Dispositif d'abonné de réseau (10) selon l'une des revendications précédentes, dans lequel l'unité de commande (14) est adaptée pour augmenter une alimentation dans le réseau d'alimentation électrique ou pour diminuer un prélèvement du réseau d'alimentation électrique lorsque le décalage temporel change dans la direction d'un passage par zéro de tension retardant le temps de référence.

9. Dispositif d'abonné de réseau (10) selon l'une des revendications précédentes, dans lequel l'unité de commande (14) est adaptée pour déterminer une valeur de base pour le décalage temporel en faisant la moyenne du décalage temporel déterminé sur une période de temps prédéterminée et pour commander l'échange de puissance en fonction d'une différence entre le décalage temporel actuellement déterminé et la valeur de base.

10. Dispositif d'abonné de réseau (10) selon l'une des revendications précédentes, comprenant en outre un accumulateur d'énergie (16'), l'unité de commande étant adaptée pour commander l'échange de puissance avec le réseau d'alimentation électrique en chargeant et déchargeant l'accumulateur d'énergie (16'), respectivement.
